**Europäisches Patentamt**

**European Patent Office**

**Office européen des brevets**

(11) Publication number: **0 154 174**
**B1**

(12) **EUROPEAN PATENT SPECIFICATION**

(45) Date of publication of patent specification: **13.09.89**  (51) Int. Cl.⁴: **B 65 G 47/08**

(21) Application number: **85101134.6**

(22) Date of filing: **04.02.85**

(54) A method and apparatus for forming transverse groups of articles which are fed consecutively along a conveyor.

(30) Priority: **25.02.84 JP 35079/84**

(43) Date of publication of application:
**11.09.85 Bulletin 85/37**

(45) Publication of the grant of the patent:
**13.09.89 Bulletin 89/37**

(84) Designated Contracting States:
**BE CH DE FR GB IT LI NL SE**

(56) References cited:
**GB-A-1 055 611**
**GB-A-1 208 444**
**US-A-2 708 021**
**US-A-3 923 144**
**US-A-4 344 523**

(73) Proprietor: **AB TETRA PAK**
**Box 61**
**S-221 00 Lund (SE)**

(72) Inventor: **Kaneko, Yutaka**
**9-2 Nishikoujiya 1-chome**
**Ota-ku Tokyo (JP)**
Inventor: **Brosten, Göran**
**Yoyogi Terrace Apt. 402 32-27 Tomigaya 1-chome**
**Shibuya-ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

## Description

The invention relates to a method and apparatus for forming groups of articles arranged side by side from a sequence of articles fed in a single line one after another along a conveyor. The articles are preferably rectangularly shaped articles such as paper or cardboard containers of rectangular shape, for example containing milk or juice or the like.

Such containers are individually fed from a filling or labeling station along a conveyor, usually at irregular intervals, and before packing a plurality of such containers into a box it is necessary to arrange the containers into groups or rows which are then pushed onto a receiving platform for accumulating a number of such rows.

In the prior art, there is known a method and apparatus as defined in the preamble part of claims 1 and 2, wherein the articles are pushed one by one from the conveyor in a transverse direction towards a stop member, thereby gradually accumulating a transverse row of articles. However, the operation speed of such a device is low because only one article is handled in each stroke of the pusher.

From GB—A—1 055 611 there known a method and apparatus of a different, though similar type where a continuous line of articles is pushed from a conveyor transversely on a supporting base delivered from a magazine. When a sufficient number of lines has been accumulated to fill the supporting base, the supporting base is pushed parallel to the conveyor into a wrapping machine.

From US—A—3 923 144 there is known a method and apparatus wherein articles fed in a single file row along a first conveyor are transferred to a second conveyor which has a plurality of parallel guide rails and is driven for intermittent movement transversely of the first conveyor. Transverse rows of the articles lined up along the guide rails of the second conveyor are pushed by a stepped reciprocating pusher parallel to the first conveyor onto a receiving platform. In this prior art apparatus there is a problem of possible mismatch between an article fed on the first conveyor and the guide rails of the second conveyor when this executes its intermittent movements. This may result in the articles becoming disordered or damaged when being transferred onto the second conveyor. For this reason it seems impractical to operate this prior art device at high speed.

It is therefore an object of the invention to provide a method and a device of the abovementioned kind which can operate at a high speed. Also, the method and apparatus shall provide the possibility of varying the packaging pattern, i.e. the number of articles in the groups and the number of groups to be pushed onto the receiving platform.

For solving this object the invention provides a method as defined in claim 1, as well as a device as defined in claim 2, with further improvements of the device indicated in claims 3 and 4.

An embodiment according to the present invention will be described in conjunction with the accompanying drawings in which

Fig. 1 is a plan view of the entire article storing device;

Fig. 2 is an enlarged plan view of the pusher for storing the articles only;

Figs. 3-a to 3-i are plan views describing in order of processes the storing situation in which groups of articles each comprising five pieces are stored;

Figs. 4-a to 4-c are plan views illustrating in order of processes the embodiment in which the actuating timing of the pusher taking out the articles on the storage bench is made different from that of the case of Fig. 3; and

Figs. 5-a to 5-c are plan views of arrangement in which the actuating reference position of the pusher is made different, when changing the number of stored articles.

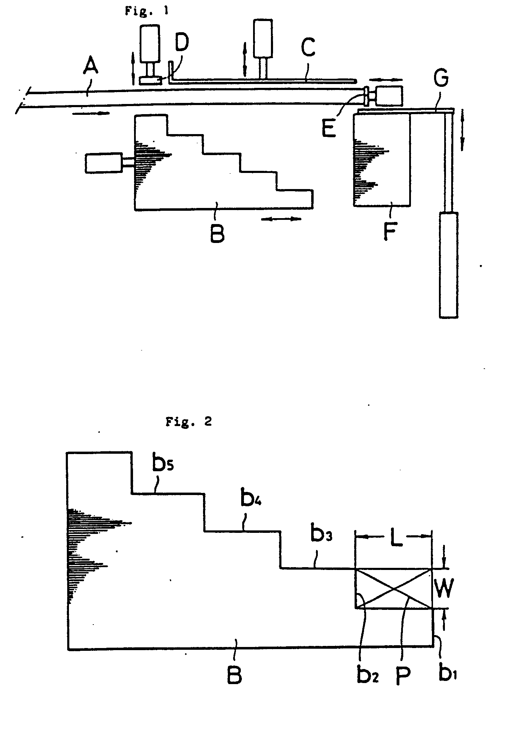

At one side of a conveyor A for conveyance of articles, which is always driven in a direction of arrow of Fig. 1, a pusher B is provided in such a way that said pusher B may be slidable in a lengthwise direction parallel to the conveyor A. A pusher C is provided oppositely to the location of the pusher B with the conveyor A interposed between these pushers.

As shown in Fig. 2 in detail, the pusher B is stepwise tapered, having a plurality of steps $b_1$—$b_5$ whose longitudinal side is approximately equal to the length L of the articles P and whose transverse side is approximately equal to the width W of the articles P, which steps are contiguously formed thereon and are able to house one by one the articles P in each of the steps $b_1$—$b_5$. The steps $b_1$—$b_5$ may be preferably slightly larger than each square-shaped article P, because, if so, the articles can be completely housed and when collecting the articles it can be avoided that the articles break the line by means of being caught on the pusher B.

The pusher C, capable of making an advance stroke to the side of the pusher B across the surface of the conveyor A, enables by its actuation to press one group by one group the articles which are fed on the conveyor A against the pusher B equipped with the steps.

Furthermore, a stopper D is provided on the same side as the pusher C of the conveyor A and a retard E is also provided just in front of the conveyor A.

When the stopper D, which can advance towards the conveyor A from the location shown in Fig. 1, advances thereto, the articles which are fed on the conveyor A can be temporarily interrupted at the provisional location of the stopper D.

The retard E, capable of moving in a lengthwise direction of the conveyor A advances from the location of Fig. 1 to left side so that it may catch the leading article of a series of articles which are fed at random distances on the conveyor A thereby causing the articles to form a contiguous line on the side of the pusher C. Thereafter the retard E retreats by one step upon completion of actuating the stopper D thereby causing a gap to open between the articles forming a line and the article engaged by the stopper D.

In the drawing, F is a storage bench and G is a pusher for feeding out a group of articles put on the storage bench F to the subsequent process (e.g. an encasing process).

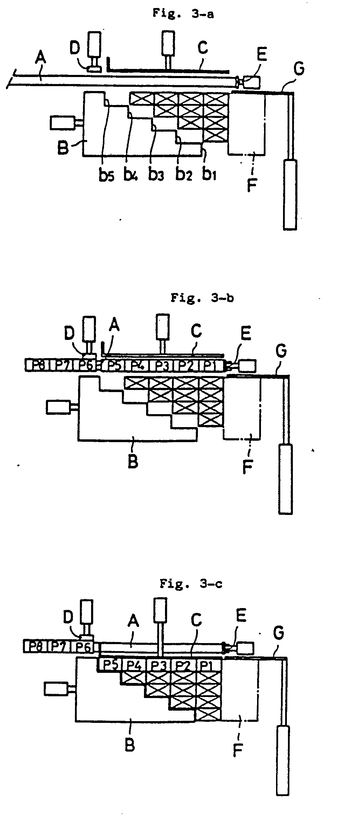

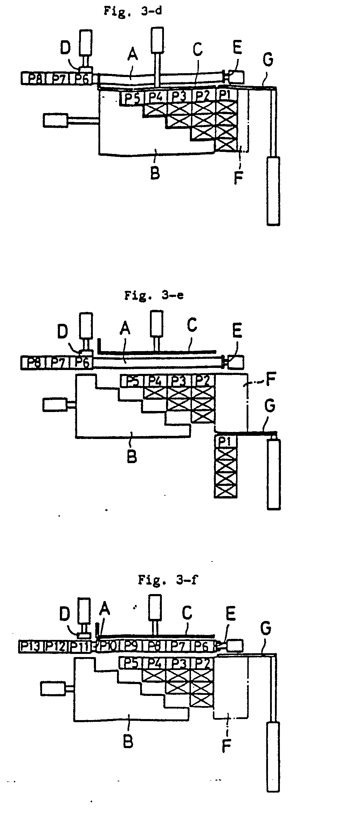

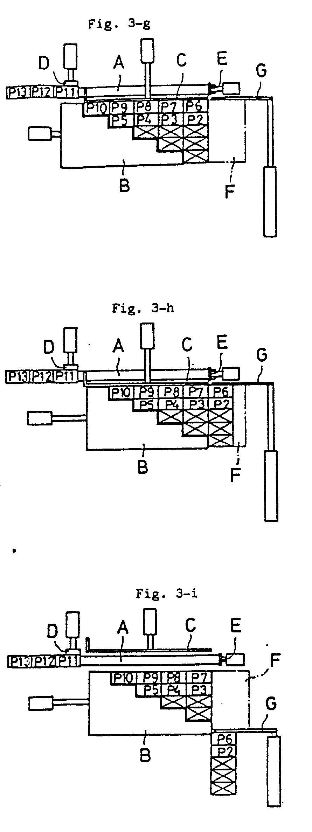

Next, referring to the case of storing the articles in groups of five pieces, the storing situation to be developed may be described in conjunction with Figs. 3-a to 3-i.

As shown in Fig. 3-a ten articles are already arranged in such a manner that four articles are set aligned with the leading end face $b_1$ of the pusher B, three articles are aligned with the side face $b_2$ of the subsequent step thereof, two articles are aligned with the side face $b_3$ of the next step thereof, and one article is aligned with the further step $b_4$, i.e. the number of articles in each transverse row is reduced one by one toward the more backward steps. The whole arrangement of articles is spaced from the corresponding side surfaces of the pusher B so that an empty space or gap corresponding to the size of one article is formed adjacent the leading end part $b_1$ and each of the stages $b_2$—$b_3$ of the pusher B.

By driving the conveyor A a series of articles is fed at random distances and when the leading article $P_1$ reaches the location of the retard E which is provided just before the forward section of the conveyor A, the same is interrupted by the retard E so that the following four articles $P_2$—$P_5$ are stopped, by engaging with the rear side of the article $P_1$ a.s.o. at the side of the pusher C.

When five articles $P_1$—$P_5$ have accumulated along the pusher C, as shown in Fig. 3-b the subsequent article $P_6$ is intercepted by the stopper D which is actuated at that time, and simultaneously the retard E is controlled to make a retreat by one step, whereby an interval between the articles $P_1$—$P_5$ and the following article $P_6$ is established.

At that moment, as shown in Fig. 3-c, the pusher C is actuated, whereby the five articles $P_1$—$P_5$, which are contiguous to one another in the lengthwise direction, are pressed towards the pusher B, while keeping the form of a line so that the article $P_5$ positioned at the most rear place of the line is housed in the step $b_5$ located at the left side of the pusher B, the articles $P_4$—$P_1$ being correspondingly located before that step. By this shifting of the line of articles $P_1$—$P_4$, the articles which had previously been located in front of the corresponding steps of the pusher B are synchronously moved in the transverse direction so that they are housed in the recessed steps in such a manner that the article located at the first line's right end is moved in front of the leading end face $b_1$ of the pusher B, the article located at the second line's right end is housed into the second step $b_2$ and so on.

Thereafter, as shown in Fig. 3-d by advancing the pusher B only by the length L of one article, five articles including $P_1$ located at the front line of the pusher B are pushed forward as one group consisting of five articles onto the surface of the storage bench F. Then, as shown in Fig. 3-e, by actuating the pusher G, the articles on the storage bench F, which are still bundled up as one group consisting of five articles, can be fed out to the subsequent process (e.g. the encasing process).

During the actuation of the pusher G, when the stopper D makes a retreat, as shown in Fig. 3-f, the article $P_6$ which had previously been intercepted, and the following articles are fed along the pusher C, and once the fifth article $P_{10}$ has joined the line, the stopper D is actuated again so that the following articles from $P_{11}$ on are intercepted. Then by retreating the retard E which had been advanced once again, similarly to the foregoing case, an interval is established between the articles $P_6$—$P_{10}$ and the following articles from $P_{11}$ on.

On the other hand, when the pusher B returns from the position shown in Fig. 3-d to the position shown in Fig. 3-e, a total of ten articles is again in the stand-by position and when actuating the pusher C once again, as shown in Fig. 3-g, the articles $P_6$—$P_{10}$ are pushed out towards the pusher B similarly to the foregoing case of $P_1$—$P_5$ so that the article $P_6$ is pushed into the location contiguous to the article $P_2$ located at the first lead line's left end, the article $P_7$ is pushed into the location contiguous to the article $P_3$ located at the second line's left end, the article $P_8$ is pushed into the location contiguous to the article $P_4$ located at the third line's left end, the article $P_9$ is pushed into the location contiguous to the article $P_5$ located at the fourth line's left end, and the article $P_{10}$ located at the most rear position of the line is pushed into the recessed step $b_5$, located at the most rear position, of the pusher B. By means of the shift of the articles $P_6$—$P_{10}$, each of the articles previously standing-by spaced from the pusher B are fed one by one in the lengthwise direction so that they are housed into the corresponding recessed steps in such a manner that the article located at the first line's right end is put in front of the leading end face $b_1$ of the pusher B, the article located at the first step end face $b_1$ of the pusher B, the article located at the second line's right end is put in the second step $b_2$ of the pusher B and so on.

Furthermore, as shown in Fig. 3-h, when advancing the pusher B once again, five articles including $P_6$ and $P_2$, which are located at the lead line of the pusher B, are pushed out to the surface of the storage bench F, while being still bundled up as one group consisting of five articles. Subsequently, as shown in Fig. 3-i, when actuating the pusher G, the articles on the storage bench F can be fed out to the subsequent process, while being still bundled up as one group of five pieces.

The repetition of such an operation enables efficiently the storing of the articles.

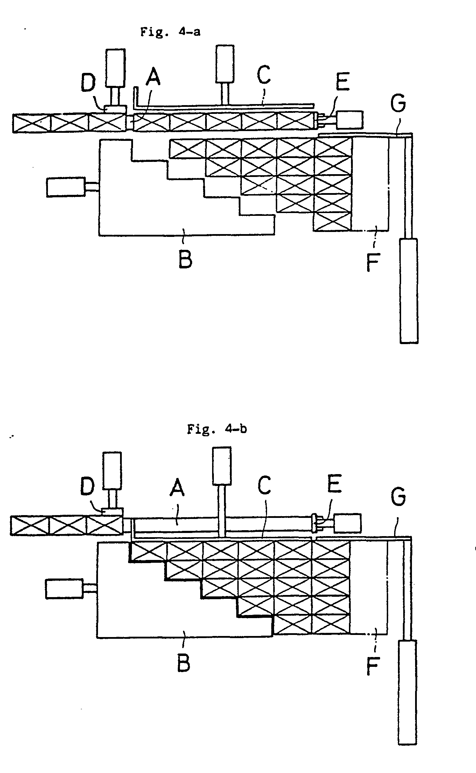

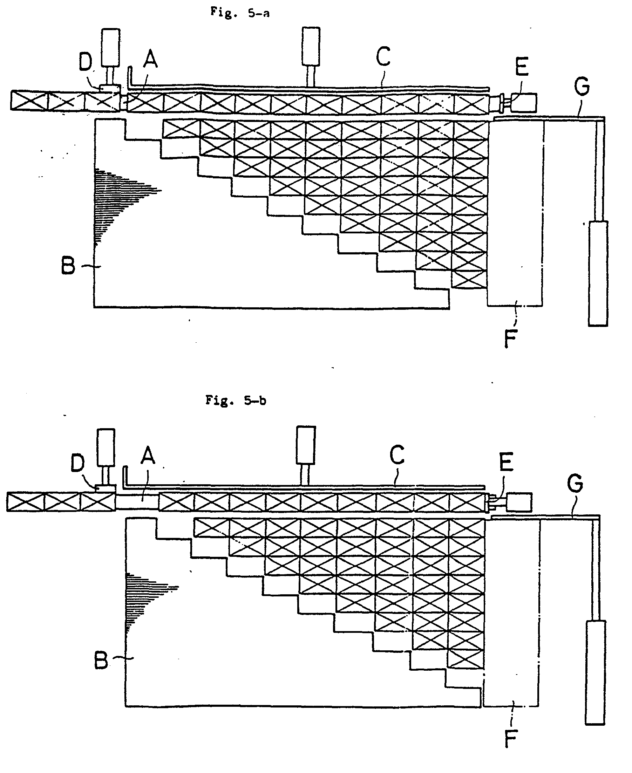

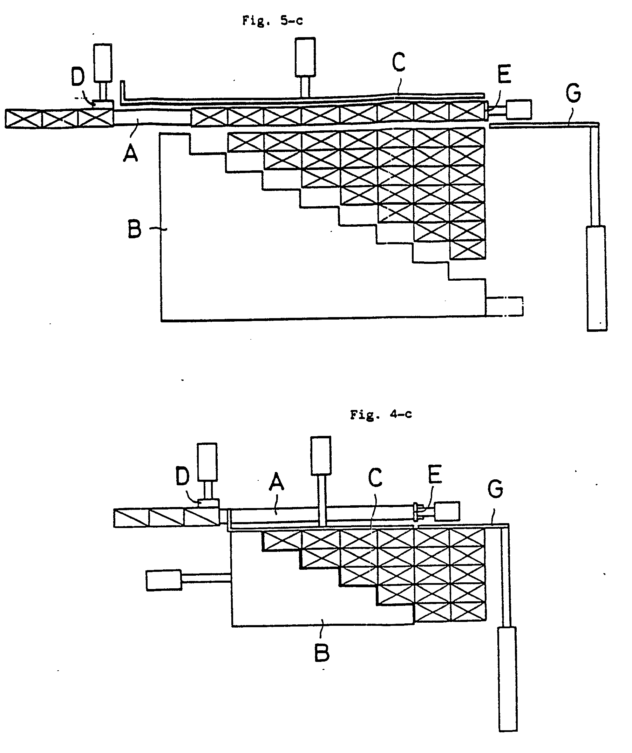

Figs. 4-a—4-c illustrate the embodiment in which the actuating timing of the pusher G is adapted to be different from that of the case of Figs. 3-a—3-i. According to the Figs. 3, the pusher G is actuated immediately when the configuration of Fig. 3-d or Fig. 4-a has been reached. However, according to the Figs. 4 the pusher G is not actuated directly from the configuration, but, only when a configuration as shown in Fig. 4-c has been reached, i.e. after two lines of articles, each comprising a group of five articles have been consecutively pushed onto the storage bench F. Therefore two groups of articles at a time can be fed out to the subsequent process by the pusher G. Suitable variation in the actuating timing of the pusher G makes it possible to adapt corresponding to other modes of packaging.

In order to change the number of stored articles, one possibility is to change the number of steps of the pusher B. However, even without changing the number of steps it is also possible to serve such a purpose. For example, in the case of using a pusher B equipped with ten stages, if the pusher B is put in a position as shown in Fig. 5-a before its actuation, one group of articles consisting of ten pieces can be stored at the same time, but if the pusher B is put in a starting position advanced by one length L (one pitch) of an article as shown in Fig. 5-b, groups of articles which comprise nine articles each can be stored every time, and similarly if the pusher B is moved from an end position further advanced by one pitch as shown in Fig. 5-c, groups of articles comprising eight pieces will be stored in every stroke. Thus, by setting the actuating reference position or starting position of the pusher B is shifted corresponding to the number of articles to be stored, and by setting in every cycle the number of articles which are accumulated along the pusher C corresponding to the number of articles to be stored, the number of stored articles can be optionally altered and the process allows a packaging pattern in which the number of packaged articles can be varied. At that time, as shown by a chain line in Fig. 5-c, it is convenient that the leading position of the pusher B is removable, if necessary. It is also possible that the number of articles which are fed forward from the stopper D is automatically controlled, for example by means of a photocell which reads or counts the number.

According to the present invention, compared with the case of storing the articles while the pusher engages the articles one by one, the storing efficiency is much more increased, and according to the present device, since the articles to be fed in a lengthwise direction are safely arrested by the pusher B equipped with the steps, they are fed out and stored without falling down or scattering.

Since the change in the number of steps and the actuating reference position of the pusher B may enable the number of stored articles and the storing pattern (or packing pattern) to be freely changed, the same device can be used to perform the storing process corresponding to various kinds of packing pattern.

## Claims

1. A method of forming groups of articles arranged side by side from a sequence of articles fed in a single line one after another along a conveyor (A) by repeatedly pushing the articles from the conveyor in the transverse direction to form rows of side by side articles extending transversely of the conveyors, and then pushing one so formed row of side by side articles at a time onto a receiving surface (F), characterized in that each time a number of articles accumulated in a contiguous line on the conveyor (A) is formed, the said contiguous line is pushed in the transverse direction from the conveyor (A) by a reciprocating movement of a first pusher (C), towards a second pusher (B) having a stepped configuration with the length (L) and width (W) of each step substantially corresponding to that of one article, said first pusher (C) having a total length parallel to the conveyor (A) corresponding to the number of contiguous articles pushed at the same time and the length of its reciprocating movement being such that the first pusher (C) moves the contiguous line of accumulated articles into contact with the existing contiguous line of accumulated articles which was pushed by the preceding stroke of the said first pusher (C) and then moves all the lines of accumulated articles over a distance equal to the width (W) of one step of the second pusher (B), and that the second pusher (B) is reciprocated in the lengthwise direction of the conveyor (A) by a stroke length (L) corresponding to the length of one article, whereby in each cycle one article is added to each of the transverse rows previously formed along said second pusher (B) and then all the rows are advanced by one stroke length (L) towards the receiving surface (F) by the reciprocating movement of the second pusher (B).

2. An article arranging and storing device, comprising a conveyor (A) for conveying a sequence of articles, a first pusher (C) reciprocatable transversely to the conveyor (A) for pushing articles in the transverse direction from said conveyor for forming transverse rows of side by side articles, and a second pusher (B) reciprocatable parallel to the conveyor (A) for pushing the so formed transverse rows of side by side articles onto a receiving platform (F), characterized in that said second pusher (B) has a stepped configuration tapering in the feeding direction of the conveyor (A), with each step having a length (L) and width (W) substantially equal to that of an article, each step forming a side face stopping a transverse row of side by side articles pushed by the first pusher (C), and an end face for pushing the articles toward the receiving platform (F).

3. A device as claimed in claim 2, characterized by a stopper (D) located upstream of the first pusher (C) in the feeding direction of the conveyor (A) for intercepting articles fed on the conveyor (A) before they reach the said first pusher (C).

4. A device as claimed in claim 2, characterized by a retard or stop device (E) located downstream of said first pusher (C) in the feeding direction of the conveyor (A) for providing a stop for articles to be accumulated along the said first pusher (C), said retard or stop device (E) being reciprocatable in the feeding direction of the conveyor (A).

## Patentansprüche

1. Verfahren zum Bilden von Gruppen von Gegenständen, die Seite an Seite angeordnet sind, aus einer Folge von Gegenständen, die in einer einzigen Reihe einer nach dem anderen entlang eines Förderers (A) zugeführt werden, durch wiederholtes Wegschieben der Gegenstände von einem Förderer in Querrichtung, um Reihen von Seite an Seite stehender Gegenstände zu bilden, die sich quer zu den Förderen erstrekken und dann durch gleichzeitiges Schieben einer so geformten Reihe von Seite an Seite stehender Gegenstände auf eine Aufnahmefläche (F), dadurch gekennzeichnet, daß jedesmal wenn eine Anzahl von Gegenständen angesammelt in einer angrenzenden Reihe auf dem Förderer gebildet ist, die angrenzende Reihe durch eine Hin- und Herbewegung eines ersten Schiebers (C) in Querrichtung von dem Förderer (A) gegen einen zweiten Schieber (B) geschoben wird, der einen abgestuften Aufbau mit der Länge (L) und der Breite (W) für jede Stufe hat, die im wesentlichen mit der eines Gegenstandes übereinstimmen, wobei der erste Schieber (C) eine gesamte Länge parallel zum Förderer (A) hat, die der Anzahl der angrenzenden Gegenstände entspricht, die zur gleichen Zeit geschoben werden und die Länge seiner Hin- und Herbewegung so ist, daß der erste Schieber (C) die angrenzende Reihe von angesammelten Gegenständen in Berührung mit der bestehenden angrenzenden Reihe von angesammelten Gegenständen bringt, die bei dem vorhergehenden Stoß des ersten Schiebers (C) verschoben wurde, und dann alle Reihen angesammelter Gegenstände über eine Strecke gleich der Breite (W) einer Stufe des zweiten Schiebers (B) bewegt, und daß der zweite Schieber (B) in Längsrichtung des Förderers (A) durch eine Stoßlänge (L) hin- und herbewegt wird, die der Länge eines Gegenstandes entspricht, wodurch in jedem Zyklus ein Gegenstand zu jeder der vorher entlang dem zweiten Schieber (B) gebildeten Querreihen hinzukommt und dann alle Reihen durch eine Stoßlänge (L) auf die Aufnahmefläche (F) durch die Hin- und Herbewegung des zweiten Schiebers (B) vorgeschoben werden.

2. Vorrichtung zum Anordnen und Speichern von Gegenständen, mit einem Förderer (A) zum Befördern einer Folge von Gegenständen, mit einem ersten Schieber (C), der quer zum Förderer (A) hin- und herbewegbar ist, um die Gegenstände in Querrichtung von dem Förderer zu schieben, um Querreihen von Seite an Seite stehender Gegenstände zu bilden, und mit einem zweiten Schieber (B) der parallel zum Förderer (A) hin- und herbewegbar ist, um die so gebildeten Querreihen der Seite an Seite stehenden Gegenstände auf eine Aufnahmefläche (F) zu schieben, dadurch gekennzeichnet, daß der zweite Schieber (B) einen abgestuften Aufbau hat, der sich in Zuführrichtung des Förderers (A) verjüngt, wobei jede Stufe eine Länge (L) und eine Breite (W) hat, die im wesentlichen gleich der eines Gegenstandes sind, wobei jede Stufe eine Seitenfläche bildet, die eine Querreihe der Seite an Seite stehenden Gegenstände stoppt, die durch den ersten Schieber (C) verschoben wird, und eine Stirnfläche zum Schieben der Gegenstände auf die Aufnahmefläche (F) zu.

3. Vorrichtung nach Anspruch 2, gekennzeichnet durch einen Stopper (D) der stromaufwärts des ersten Schiebers (C) in der Zuführrichtung des Förderers (A) angeordnet ist, zum Aufhalten der auf dem Förderer (A) zugeführten Gegenstände bevor sie den ersten Schieber (C) erreichen.

4. Vorrichtung nach Anspruch 2, gekennzeichnet durch eine Verzögerungs- oder Steuervorrichtung (E), die stromabwärts des ersten Schiebers (C) in der Zuführrichtung des Förderers (A) angeordnet ist, um für die Gegenstände, die entlang des ersten Schiebers (C) angesammelt werden sollen, einen Anschlag zu schaffen, wobei die Verzögerungs- oder Stopvorrichtung (E) in der Zuführrichtung des Förderers (A) hin- und herbewegbar ist.

## Revendications

1. Procédé pour former des groupes d'articles disposés côte à côte à partir d'une suite d'articles avancés en une file unique, les uns à la suite des autres, le long d'un transporteur (A), par une poussée répétée des articles à partir du transporteur dans la direction transversale pour former des rangées d'articles côte à côte s'étendant transversalement aux transporteurs, puis par poussée d'une rangée ainsi formée d'articles disposés côte à côte, à un instant, sur une surface de réception (F), caractérisé en ce que, a chaque fois qu'un nombre d'articles accumulés en une file contiguë sur le transporteur (A) est atteint, ladite file contiguë est poussée dans la direction transversale à partir du transporteur (A) par un mouvement alternatif d'un premier poussoir (C), vers un second poussoir (B) ayant une configuration étagée dans laquelle la longueur (L) et la largeur (W) de chaque gradin correspondent sensiblement à celles d'un article, ledit premier poussoir (C) ayant une longueur totale, parallèle au transporteur (A), correspondant au nombre d'articles contigus poussés en même temps et la longueur de son mouvement alternatif étant telle que le premier poussoir (C) déplace la file contiguë d'articles accumulés jusqu'à ce qu'elle entre en contact avec la file contiguë existante d'articles accumulés qui a été poussée par la course précédente dudit premier poussoir (C), puis déplace toutes les files d'articles accumulés sur une distance égale à la largeur (W) d'un gradin du second poussoir (B), et en ce que le second poussoir (B) est animé d'un mouvement alternatif dans la direction longitudinale du transporteur (A) sur une longueur (L) de course correspondant à la longueur d'un article, de manière qu'à chaque cycle, un article soit ajouté à chacune des rangées transversales précédemment formées le long dudit second poussoir (B), puis que toutes les rangées soient avancées d'une longueur (L) de course vers la surface de réception (F) par le mouvement alternatif du second poussoir (B).

2. Dispositif d'agencement et d'approvisionnement d'articles, comprenant un transporteur (A) destiné à transporter une suite d'articles, un premier poussoir (C) pouvant exécuter un mouvement alternatif transversalement au transporteur (A) pour pousser des articles dans la direction transversale à partir dudit transporteur afin de former des rangées transversales d'articles côte à côte, et un second poussoir (B) pouvant exécuter un mouvement alternatif parallèle au transporteur (A) pour pousser les rangées transversales, ainsi formées, d'articles côte à côte sur une plate-forme (F) de réception, caractérisé en ce que ledit second poussoir (B) présente une configuration étagée s'amincissant dans le sens d'avance du transporteur (A), chaque gradin ayant une longueur (L) et une largeur (W) sensiblement égales à celles d'un article, chaque gradin formant une face latérale arrêtant une rangée transversale d'articles côte à côte poussés par le premier poussoir (C), et une face extrême pour pousser les articles vers la plate-forme (F) de réception.

3. Dispositif selon la revendication 2, caractérisé par un élément d'arrêt (D) placé en amont du premier poussoir (C) dans le sens d'avance du transporteur (A) afin d'intercepter des articles avancés sur le transporteur (A) avant qu'ils atteignent ledit premier poussoir (C).

4. Dispositif selon la revendication 2, caractérisé par un dispositif (E) de ralentissement ou d'arrêt placé en aval dudit premier poussoir (C) dans le sens d'avance du transporteur (A) afin de constituer une butée pour des articles devant être accumulés le long dudit premier poussoir (C), le dispositif de ralentissement ou d'arrêt (E) pouvant être animé d'un mouvement alternatif dans la direction d'avance du transporteur (A).

EP 0 154 174 B1

Fig. 1

Fig. 2

1

EP 0 154 174 B1

Fig. 3-a

Fig. 3-b

Fig. 3-c

Fig. 3-d

Fig. 3-e

Fig. 3-f

3

Fig. 3-g

Fig. 3-h

Fig. 3-i

Fig. 4-a

D     A     C     E     G

B     F

Fig. 4-b

D     A     C     E     G

B     F

Fig. 5-a

Fig. 5-b

Fig. 5-c

Fig. 4-c